# EUROPEAN PATENT SPECIFICATION

(11) **EP 2 121 868 B1**
(45) Date of publication and mention of the grant of the patent: **07.05.2014**
(21) Application number: 08726464.4
(22) Date of filing: 05.03.2008
(51) Int. Cl.: C09K 8/03, C09K 8/10, C09K 8/42, C09K 8/588, C09K 8/60, C09K 8/68

(54) **STABLE SODIUM THIOSULFATE BASED FLUIDIZED POLYMER SUSPENSIONS OF HYDROXYETHYL CELLULOSE FOR OILFIELD SERVICES**
STABILE UND FLUIDISIERTE POLYMERSUSPENSIONEN AUF NATRIUM-THIOSULFAT-BASIS AUS HYDROXYETHYL-ZELLULOSE FÜR OPERATIONEN AUF ÖLFELDERN
SUSPENSIONS POLYMÈRES FLUIDIFIÉE À BASE DE THIOSULFATE DE SODIUM STABLES DE CELLULOSE HYDROXYÉTHYLIQUE POUR DES SERVICES DE CHAMP PÉTROLIFÈRE

(30) Priority: 09.03.2007 US 906149 P
(43) Date of publication of application: 25.11.2009
(73) Proprietor: Hercules Incorporated, Wilmington, DE 19894-0001 (US)
(72) Inventor: MELBOUCI, Mohand, Wilmington, DE 19808 (US)
(74) Representative: HOFFMANN EITLE
(86) International application number: PCT/US2008/002937
(87) International publication number: WO 2008/112113

(56) References cited:
- EP-A- 0 405 930
- EP-A- 0 619 340
- EP-A- 1 213 270
- US-A- 5 228 908
- US-A1- 2007 135 312

## Description

### FIELD OF INVENTION

The present invention relates to a composition and to the use of sodium thiosulfate based fluidized polymer suspensions of hydroxyethyl cellulose in oil field applications such completion fluids, drilling fluids and oil well cement slurries as rheology/viscosity modifier and fluid loss reducer.

### BACKGROUND OF THE INVENTION

Hydroxyethyl cellulose (HEC) is widely used in oilfield water-based fluids. High-viscosity types are generally used, in completion fluids, for rheology and fluid loss control properties. Low viscosity types are typically used, in oil-well cement slurries and drill-in-fluids, for filtration control properties. However, high viscosity types may find functionality, along with low viscosity ones, in oil-well cement slurries as free water control additives.

For easy handling in oil and gas well rigs and convenient storage on offshore operations, liquid additives are most preferred. However, because of potential environmental hazards when discharged offshore, usage of liquid additives is strictly regulated. A variety of environmentally acceptable solvent based polymer suspensions have been used for the past few years. These suspensions are based on either mineral oil or glycols. However, these types of suspensions still face some use restrictions as none of them meet the entire regulatory requirements regarding the aquatic toxicity, biodegradability and bio-accumulation.

The search for oil and gas well products which are entirely composed of PLONOR (Pose Little or No Risk to the environment) components is ongoing. All existing products which do not meet the requirements for PLONOR components are placed on a phase-out list, and need to be replaced as soon as "green" additives are available.

U.S. patent 5,268,466 to Burdick discloses that stable suspension of water soluble polysaccharides selected from the group of HEC, (hydroxyethyl cellulose: HPC (hydroxypropyl cellulose, MC (methyl-cellulose), EHEC (ethyl hdroxyethyl cellulose, and the like, and Guar/Guar derivatives can be prepared in a solution of 12 to 40 wt.% dibasic potassium phosphate. The suspension includes 15-30 wt. % of said polysaccharide. The suspension further includes a stabilizing amount of xanthan gum. The industrial application of these stable suspensions was recited as for use in construction and coating materials such as joint compounds and latex paints.

U.S. patent 5,407,475 discloses a suspension composition of HEC in sodium or ammonium thiosulfate brines. The composition is claimed for use in drilling fluids (completion) and provides improved thermal stability for HEC. The suspension composition contains at least 30% w/w sodium or ammonium thiosulfate. The patent does not disclose the use of such a composition in oil-well cementing slurries.

In US Patent Publication 2007/0135312 A1 a PLONOR rated fluidized suspension of HEC was disclosed. This patent application specifically teaches the use of di-potassium phosphate based aqueous suspension of HEC in oil-well servicing fluids.

To provide a wider compatibility with other cement slurry additives as well as enhance the thermal stability of HEC, there is a clear need to develop a wide range of suspensions that would still be rated PLONOR to meet specific application requirements.

### BRIEF DESCRIPTION OF THE DRAWINGS

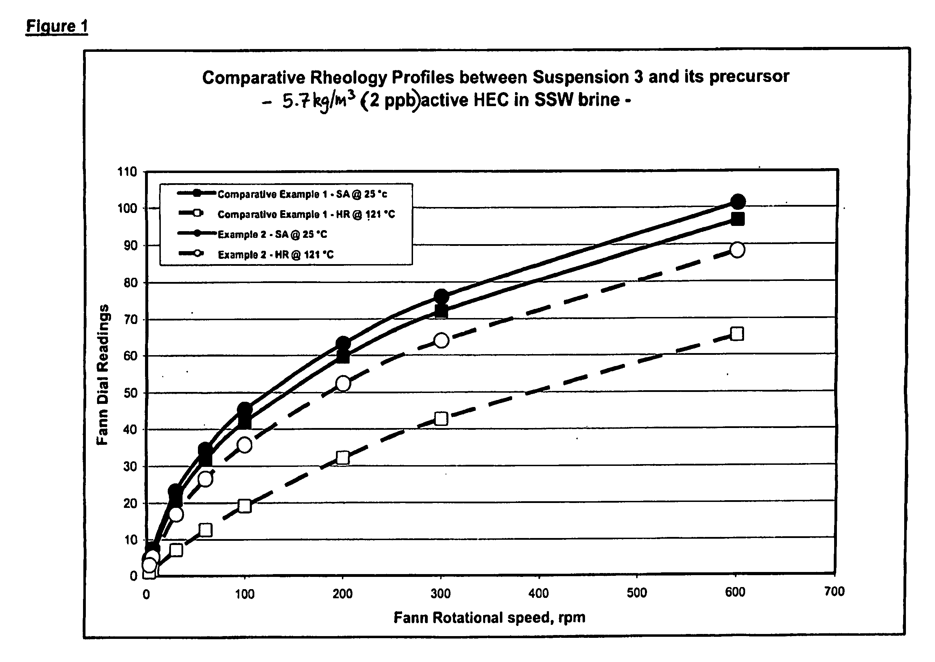

Figure 1 is a graph depicting the rheological profiles of suspensions of the present invention and comparative precursor materials at room temperature as well as at elevated temperature in NaCl saturated brine.

### SUMMARY OF THE INVENTION

A suspension composition comprising a fluid polymer suspension comprising hydroxyethyl cellulose (HEC) suspended in an aqueous solution of sodium thiosulfate, further comprising a stabilizer wherein the stabilizer is a xanthan gum or a PLONOR rated preservative such as Sodium Benzoate. The composition is useful when combined with oil field servicing fluid selected from the group consisting of drilling fluids, completion/workover fluids, stimulation fluids, such as fracturing fluids, oil well cementing fluids, gravel packing fluids and enhanced oil recovery fluids.

### DETAILED DESCRIPTION OF THE INVENTION

An objective of this invention is to provide an improved suspension of HEC in a concentrated aqueous sodium thiosulfate salt solution that has improved compatibility with other additives used in oilfield servicing fluids.

Sodium thiosulfate has the advantage to be listed on the PLONOR approved list of products for use in the North Sea.

To develop an improved long-term stability of sodium thiosulfate suspensions, modifications of the compositions have been implemented. One improvement to the sodium thiosulfate suspensions is to include a suspending agent as well as a preservative selected from the PLONOR list of approved chemicals. Suspensions containing this suspending agent have been observed to be physically stable for over 3 months.

It has been discovered that suspensions of HEC in concentrated aqueous sodium thiosulfate brine, stabilized with a small amount of xanthan gum and optionally containing a preservative such as sodium benzoate provide stable compositions that are entirely composed of components listed as PLONOR substances.

The suspension composition comprises water, HEC in an amount of 5 to 80 wt %, sodium thiosulfate in an amount of 10 to 30 wt. %, xanthan gum present in an amount of 0.01 to 0.50 wt%. Optionally in addition, a preservative of sodium benzoate may be present in an amount of 0.1 to about 1.0 wt%.

To prepare the suspension composition the components are added in any order, and mixed at room temperature.

The following examples illustrate the typical performance of this type of suspensions of the present invention in completion fluids and low temperature oil-well cement slurry compositions

### EXAMPLE 1

The suspension composition of this invention used in Example 1 consists of the following components: water; sodium thiosulfate, at about 24% by weight; HEC, at about 20% by weight; a minor amount of xanthan gum, at about 0.15% to about 0.20% by weight; and optionally a minor amount of a preservative such as sodium benzoate at an effective amount, typically at about 0.50% by weight. The resulting suspensions had excellent flow properties (Brookfield viscosity 1600 - 2100 cPs). After 3 months storage at room temperature, no signs of phase separation were observed.

Additionally, the suspensions showed excellent freeze/thaw stability. The freezing point for the suspensions was measured below -15°C. See Table 1 for detailed suspension compositions, all parts and percentages being by weight, unless otherwise indicated.

**Table 1 - Detailed Suspensions Composition**

| **Ingredients** | **Suspension 1** | **Suspension 2** | **Suspension 3** |
|---|---|---|---|
| DI water | 55.33% | 55.89% | 55.33% |
| Xanthan gum (Rhodopol^{®} 23 xanthan gum, available from Rhodia USA) | 0.17% | 0.20% | 0.17% |
| Na. Benzoate | 0.50% | - | 0.50% |
| Na. Thiosulfate | 24.00% | 23.95% | 24.00% |
| HEC (Natrosol®250 JR HEC, available from Hercules Incorporated) | 20.00% | 19.96% | - |
| HEC (Natrosol® Hivis HEC, available from Hercules incorporated) | - | - | 20.00% |

The viscosity of the Suspension 1 was 2,100 cPs, the viscosity of Suspension 2 was 1,660 cPs and the viscosity of Suspension 3 was 2,240 cPs as measured after preparation using a Brookfield viscometer.

### EXAMPLE 2

### Application in Completion Fluids

The thickening efficiency of a suspension of the present invention (Natrosol^{®} HIVIS HEC suspension, available from Hercules Incorporated (Suspension 3)) was evaluated against HEC, not in suspension form, but rather as a dry powder (Natrosol^{®} HIVIS HEC, available from Hercules Incorporated). The HEC in dry powder form was compared to the HEC suspension by dissolving 5.7 kg/m³ (2 Ib/bbl)(0.57 wt.%) equivalent dry HEC in NaCl saturated brine. The NaCl saturated brine was first prepared by dissolving 360 g NaCl in 1000 ml Deionized water. Then, 2.0 g dry HEC or 10.0 g as-is Suspension 3 was added into 420 g NaCl saturated water while mixing on Hamilton beach mixer (~ 11,500 rpm). To speed up the hydration of the polymer, 1-ml 10% NaOH solution was added into the polymer solution to raise the pH. To reduce/eliminate excess foaming, a few drops of defoamer were added. The solution was mixed for an elapsed time of 60 minutes. Two separate solutions have been prepared, homogenized and then split into two portions for aging. One portion was static aged for overnight at room temperature (~ 25°C), and the other portion was hot-rolled for overnight at 121°C. Fann rheology measurements were then performed after the aging period.

Data in Table 2 indicates that Suspension 3 (Example 2) performs slightly better than its dry precursor (Comparative Example 1) when used at a same active dosage in NaCl saturated water. Suspension 3 (Example 2) provides a higher overall rheology than the dry precursor (Comparative Example 1).

Also, it is important to note that the Suspension 3 (Example 2) provides much better thermal stability than its dry precursor (Comparative Example 1). The brine solution thickened with the Suspension 3 (Example 2) retains 87.2% / 78.7% of its apparent viscosity / Yield value versus 67.8% / 41.8% for Comparative Example 1, when submitted to hot-rolling for overnight at 121 °C.

**Table 2 - Comparative Thermal Stability in NaCl Saturated Brine**

| | | **Comp. Example 1** | | **Example 2** | |
|---|---|---|---|---|---|
| | | **Natrosol^{®} HIVIS HEC** | | **Suspension 3** | |
| Form | | Powder | | Liquid | |
| Activity | | 100% | | 20% | |
| Dosage | | 5.7kg/m³ (2 ppb) | | 2.9kg/m³ (10 ppb)as-is | |
| **Aging Conditions** | | | | | |
| Aging time | | Overnight | Overnight | Overnight | Overnight |
| Aging temperature | | 25 °C | 121 °C | 25 °C | 121 °C |
| Conditions | | Static | Hot-Rolled | Static | Hot-Rolled |
| pH | | 10.18 | 8.14 | 10.39 | 9.95 |
| **Fann Dial readings** | | | | | |
| 600 | rpm | 96.6 | 65.5 | 101.2 | 88.2 |
| 300 | rpm | 72.1 | 42.7 | 76 | 64.1 |
| 200 | rpm | 59.6 | 32.2 | 63.3 | 52.3 |
| 100 | rpm | 41.9 | 19.1 | 45.3 | 35.7 |
| 60 | rpm | 31.8 | 12.6 | 34.4 | 26.5 |
| 30 | rpm | 20.9 | 7.1 | 23.2 | 16.9 |
| 6 | rpm | 6.3 | 1.6 | 7.6 | 5.1 |
| 3 | rpm | 3.8 | 1 | 4.6 | 2.9 |
| Apparent viscosity | cPs | 48.3 | 32.75 | 50.6 | 44.1 |
| Plastic Viscosity | cPs | 24.5 | 22.8 | 25.2 | 24.1 |
| Yield value * | (lb/100ft²) | 232 (47.6) | 97 (19.9) | 248 (50.8) | 195 (40) |
| **Retained Rheology after Hot rolling** | | | | | |
| Apparent viscosity | | 67.8% | | 87.2% | |
| Plastic Viscosity | | 93.1% | | 95.6% | |
| Yield value | | 41.8% | | 78.7% | |

| | | | | | |
|---|---|---|---|---|---|
| * kg/100 m² | | | | | |

. It can be seen from Table 2, and in Figure 1, that the Suspension 3 (Example 2) is an effective thickener of completion/workover fluids while providing additional thermal stability over its dry precursor.

### EXAMPLE 3

### Application in Oil-well Cement Slurries

The following examples illustrate the typical performance of aqueous suspension of HEC (Suspension 2 (Natrosol® 250 JR HEC, available from Hercules Incorporated)) in low and medium temperature oil-well cement slurry compositions. The effect of temperature on low and medium temperature oil-well cement slurry compositions was evaluated up to 180°F (82°C), and salt tolerance up to 18% by weight of water (bwow) NaCl.

The oil-well cement slurries were formulated using additives and mixing/formulation techniques commonly employed in the industry as recommended by the American Petroleum Institute (API). All concentrations of additives in the slurry compositions (Examples 3-6) are based on weight of cement (bwoc).

The oil-well cement slurry was prepared by adding the cement dry mixture into the mix-water, eventually, containing the fluid loss additive (FLAC). The dry mixture consists of 600 g Calport G cement, 2.3% synthetic dispersant (1.15 wt. % active), 0.10% Antifoam and 2.0% Suspension 2 (0.40% active FLAC). For experiments at 180°F (82°C), 2.0% retarder (38% Ca. Lignosulfonate solution) was added to the slurry.

The performance testing of the oil-well cement slurries were conducted in terms of rheology and fluid loss control properties. Typically, the "mixing rheology" was measured with Fann type viscometer just after the slurry preparation at room temperature (~ 80° F, ~27°C), to simulate the mixing and pumping at the surface, while the "API rheology" was measured after conditioning the slurry at test temperature for 20 minutes. The fluid loss control properties were measured at 80°F (27°C) and 180°F (82°C) after the slurry conditioning.

Data in Table 3 shows that the Suspensions 2, object of this invention, provides excellent rheology properties combined with good fluid loss control properties, at a reasonably low dosage (0.40% active).

**Table 3 - Rheology and Fluid Loss data of "Suspension 2" in an oil well cement slurry**

| | **Eaxmple 3** | | | | **Eaxmple 4** | | | | **Eaxmple 5** | | | | **Eaxmple 6** | | | |
|---|---|---|---|---|---|---|---|---|---|---|---|---|---|---|---|---|
| **Ingredients** | **g** | **m/s** | **bwoc** | **gps** | **g** | **m/s** | **bwoc** | **gps** | **g** | **m/s** | **bwoc** | **gps** | **g** | **m/s** | **bwoc** | **gps** |
| Calport G oement | 600 | - | - | - | 600 | - | - | - | 600 | - | - | - | 600 | - | - | - |
| NaCl, bwow (total water) | - | - | - | - | 45.55 | - | 18% | - | - | - | - | - | 45.55 | - | 18% | - |
| Advantage A96 antifoam | 0.60 | 0.60 | 010% | 0.0113 | 0.60 | 0.60 | 0.10% | 0.0113 | 0.60 | 0.60 | 0.10% | 0.0113 | 0.60 | 0.60 | 0.10% | 0.0113 |
| Synthetic dispersant (50%) | 16.54 | 13.78 | 230% | 0.2186 | 16.54 | 13.78 | 230% | 0.2186 | 16.54 | 13.78 | 230% | 0.2186 | 16.54 | 13.78 | 230% | 0.2186 |
| Ca Ligosulfonate solution (38%) | - | - | - | - | - | - | - | - | 14.39 | 1200 | 200% | 0.188 | 14.39 | 1200 | 200% | 0.188 |
| Suspension 2 | 15.84 | 1200 | 200% | 0.171 | 15.84 | 1200 | 200% | 0.171 | 15.84 | 1200 | 200% | 0.171 | 15.84 | 1200 | 200% | 0.171 |
| Deionized water (4217% total mix water) | 233.31 | 233.31 | 38.89% | 4.388 | 233.31 | 233.31 | 38.89% | 4.388 | 224.38 | 224.38 | 37.40% | 4.22 | 224.38 | 224.38 | 37.40% | 4.22 |
| Mixing Rheology @ 80°F | | | | | | | | | | | | | | | | |
| *P.V (1.5xFx(300 DR - 100 DR). cPs* | *189* | | | | *168* | | | | *201* | | | | *223.5* | | | |
| *Yv(Fx300 DR - PV) 1b*/*100 ft2* | | | | | *5* | | | | *5* | | | | *34.5* | | | |
| *API Rheology* | 27°C (80°F) | | | | 27°C (80°F) | | | | 82°C (180°F) | | | | 82°C (180°F) | | | |
| *P.V. (1.5xFx(300 DR - 100 DR) cPs* | *247.5* | | | | *264* | | | | *105* | | | | *162* | | | |
| *Yv (Fx300 DR - PV), 1b*/*100 ft2* | *13.5* | | | | *20* | | | | *-1* | | | | *84* | | | |
| | 27°C (80°F) | | | | 27°C (80°F) | | | | 82°C (180°F) | | | | 82°C (180°F) | | | |
| 30' API Fluid Loss, cc | 228 | | | | 74.8 | | | | 59.6 | | | | 152.4 | | | |

It can be seen from Table 3, that the FLAC suspension, subject of his invention, is an effective fluid loss control additive of oil-well cement slurries.

## Claims

1. An aqueous polymer suspension of hydroxyethyl cellulose and sodium thiosulfate, and optionally sodium benzoate, for use in oil field servicing fluids, wherein the suspension composition comprises
water,
hydroxyethyl cellulose in an amount of 5 - 80 wt%,
sodium thiosulfate in an amount of 10 - 30 wt.%,
xanthan gum in an amount of 0.01 to 0.50 wt.%, and
optionally sodium benzoate in an amount of 0.1 - 1.0 wt.%.

2. The suspension composition according to claim 1, wherein the suspension composition comprises 24 wt.% sodium thiosulfate, 20 wt.% hydroxyethyl cellulose, and 0.15 - 0.20 wt.% xanthan gum.

3. Use of the aqueous polymer suspension according to claim 1 or 2, comprising sodium benzoate as a preservative, in a combination, wherein the polymer suspension is fluidized and is present in admixture with (b) an oil field servicing fluid selected from drilling fluids, completion/work over fluids, stimulation fluids, oil well cementing fluids, gravel packing fluids and enhanced oil recovery fluids.

4. The use according to claim 3, wherein the oil field servicing fluid is an oil well cementing fluid.

5. The use according to claim 3, wherein the oil field servicing fluid is a drilling fluid.

6. The use according to claim 3 wherein the oil field servicing fluid is a completion/work over fluid.

7. The use according to claim 3, wherein the oil field servicing fluid is a stimulation fluid.

8. The use according to claim 3, wherein the oil field servicing fluid is a fracturing fluid.

9. The use according to claim 3, wherein the oil field servicing fluid is a gravel packing fluid.

10. The use according to claim 3, wherein the oil field servicing fluid is an enhanced oil recovery fluid.

## Patentansprüche

1. Wässrige Polymersuspension von Hydroxyethylcellulose und Natriumthiosulfat und gegebenenfalls Natriumbenzoat zur Verwendung in Fluiden zum Betrieb von Ölfeldern, wobei die Suspensionszusammensetzung
Wasser,
Hydroxyethylcellulose in einer Menge von 5 bis 80 Gew.%,
Natriumthiosulfat in einer Menge von 10 bis 30 Gew.%,
Xanthangummi in einer Menge von 0,01 bis 0,50 Gew.% und
gegebenenfalls Natriumbenzoat in einer Menge von 0,1 bis 1,0 Gew.%
umfasst.

2. Suspensionszusammensetzung gemäss Anspruch 1, wobei die Suspensionszusammensetzung 24 Gew.% Natriumthiosulfat, 20 Gew.% Hydroxyethylcellulose und 0,15 bis 0,20 Gew.% Xanthangummi umfasst.

3. Verwendung der wässrigen Polymersuspension gemäss Anspruch 1 oder 2, umfassend Natriumbenzoat als Konservierungsmittel, in einer Kombination, worin die Polymersuspension fluidisiert ist und in Mischung mit (b) einem Fluid zum Betrieb von Ölfeldern, ausgewählt aus Bohrflüssigkeiten, Fertigstellungs-/ Arbeitsflüssigkeiten, Stimulationsfluiden, Ölbohrloch-Zementierungsflüssigkeiten, Kiesschüttungsflüssigkeiten und verbesserten Ölgewinnungsflüssigkeiten, vorhanden ist.

4. Verwendung gemäss Anspruch 3, wobei das Fluid zum Betrieb von Ölfeldern eine Ölbohrloch-Zementierungsflüssigkeit ist.

5. Verwendung gemäss Anspruch 3, wobei das Fluid zum Betrieb von Ölfeldern eine Bohrflüssigkeit ist.

6. Verwendung gemäss Anspruch 3, wobei das Fluid zum Betrieb von Ölfeldern eine Fertigstellungs-/ Arbeitsflüssigkeit ist.

7. Verwendung gemäss Anspruch 3, wobei das Fluid zum Betrieb von Ölfeldern ein Stimulationsfluid ist.

8. Verwendung gemäss Anspruch 3, wobei das Fluid zum Betrieb von Ölfeldern eine Spaltflüssigkeit ist.

9. Verwendung gemäss Anspruch 3, wobei das Fluid zum Betrieb von Ölfeldern eine Kiesschüttungsflüssigkeit ist.

10. Verwendung gemäss Anspruch 3, wobei das Fluid zum Betrieb von Ölfeldern eine Ölgewinnungsflüssigkeit ist.

## Revendications

1. Suspension de polymère aqueuse d'hydroxyéthylcellulose et de thiosulfate de sodium et éventuellement de benzoate de sodium, à utiliser dans les fluides d'entretien d'un champ pétrolifère, dans laquelle la composition de suspension comprend :
de l'eau ;
de l'hydroxyéthylcellulose dans une quantité de 5-80% en poids ;
du thiosulfate de sodium dans une quantité de 10-30% en poids ;
de la gomme xanthane dans une quantité de 0,01 à 0,50% en poids ; et
éventuellement du benzoate de sodium dans une quantité de 0,1-1,0% en poids.

2. Composition de suspension selon la revendication 1, dans laquelle la composition de suspension comprend 24% en poids de thiosulfate de sodium, 20% en poids d'hydroxyéthylcellulose et 0,15-0,20% en poids de gomme de xanthane.

3. Utilisation de la suspension de polymère aqueuse selon la revendication 1 ou 2, comprenant du benzoate de sodium comme conservateur, dans une combinaison, dans laquelle la suspension de polymère est fluidisée et est présente en mélange avec (b) un fluide d'entretien d'un champ pétrolifère, choisi à partir de fluides de forage, de fluides de complétion/reconditionnement, de fluides de stimulation, de fluides de cimentation de puits de pétrole, de fluides de gravier filtre et des fluides de récupération assistée du pétrole.

4. Utilisation selon la revendication 3, dans laquelle le fluide d'entretien de champ pétrolifère est un fluide de cimentation de puits de pétrole.

5. Utilisation selon la revendication 3, dans laquelle le fluide d'entretien de champ pétrolifère est un fluide de forage.

6. Utilisation selon la revendication 3, dans laquelle le fluide d'entretien de champ pétrolifère est un fluide de complétion/reconditionnement.

7. Utilisation selon la revendication 3, dans laquelle le fluide d'entretien de champ pétrolifère est un fluide de stimulation.

8. Utilisation selon la revendication 3, dans laquelle le fluide d'entretien de champ pétrolifère est un fluide de fracturation.

9. Utilisation selon la revendication 3, dans laquelle le fluide d'entretien de champ pétrolifère est un fluide de gravier filtre.

10. Utilisation selon la revendication 3, dans laquelle le fluide d'entretien de champ pétrolifère est un fluide de récupération assistée du pétrole.
